Europäisches Patentamt

European Patent Office

Office européen des brevets

(11) Veröffentlichungsnummer: **0 539 894 A1**

## EUROPÄISCHE PATENTANMELDUNG

(21) Anmeldenummer: 92118248.1

(22) Anmeldetag: 24.10.92

(51) Int. Cl.5: **B32B 27/34**, C08G 69/36, B65D 65/40

(30) Priorität: 31.10.91 CH 3172/91

(43) Veröffentlichungstag der Anmeldung:
05.05.93 Patentblatt 93/18

(84) Benannte Vertragsstaaten:
CH DE DK FR GB IT LI NL

(71) Anmelder: EMS-INVENTA AG
Selnaustrasse 16
CH-8001 Zürich(CH)

(72) Erfinder: Caluori, Hans Jürg
Oberdorf 8
CH-7306 Fläsch(CH)
Erfinder: Dalla Torre, Hans, Dr.
Via Cuschas 7
CH-7013 Domat/Ems(CH)
Erfinder: Hewel, Manfred, Dr.
Oberdorf 34
CH-7415 Rodels(CH)

(54) Mehrschicht-Verbund für Mehrweg-Mehrschicht-Verpackungen.

(57) Mehrschicht-Verbund für Mehrweg-Mehrschicht-Verpackungen aus mindestens einer Copolyamid-Schutzschicht und mindestens einer Copolyamid-Barriereschicht.

- Die Schutzschicht ist kochwasserbeständig-transparent und das Copolyamid besteht aus einem teilaromatischen, amorphen Copolyamid, das aus

(a) 2 bis 40 Mol-Teilen eines langkettigen aliphatischen Monomeren mit $C_9 - C_{40}$-Atomen oder Lactam mit $C_9 - C_{12}$-Atomen oder $\omega$-Aminocarbonsäuren mit $C_9 - C_{12}$-Atomen oder Dodecandiamin und Dodecandisäure (b) cycloaliphatischem Diamin mit $C_6 - C_{26}$-Atomen, und

(c) unsubstituierten oder substituierten aromatischen Dicarbonsäuren mit $C_8 - C_{20}$-Atomen aufgebaut ist.
- Das Copolyamid der Barriereschicht ist ein teil-aromatisches, amorphes Copolyamid aus

(d) O bis 4O Mol-Teilen Lactam mit $C_6 - C_{12}$-Atomen oder $\omega$-Aminocarbonsäure mit $C_6 - C_{12}$-Atomen oder aliphatischem Diamin mit $C_6 - C_{12}$-Atomen und aliphatischer Dicarbonsäure mit $C_6 - C_{12}$-Atomen,

(e) mindestens einem kurzkettigen aliphatischen Diamin mit $C_4 - C_8$-Atomen, welches durch maximal 49 Gew.-% cycloaliphatisches Diamin mit $C_6 - C_{26}$-Atomen und/oder durch maximal 40 Mol-% araliphatisches Diamin mit $C_6 - C_{26}$-Atomen ersetzt sein kann, kombiniert mit

(f) unsubstituierten oder substituierten aromatischen Dicarbonsäuren mit $C_8 - C_{20}$-Atomen, welche von O bis 2O Mol-Teilen durch mindestens eine aliphatische Dicarbonsäure mit $C_4 - C_8$-Atomen ersetzt sein können.

Die Erfindung betrifft weiterhin die Verwendung dieses Mehrschicht-Verbundes zur Herstellung von Mehrweg-Mehrschicht-Verpackungen.

Die Erfindung betrifft den in den Patentansprüchen angegebenen Gegenstand. Insbesondere betrifft die Erfindung einen Mehrschicht – Verbund für Mehrweg – Mehrschicht – Verpakkungen aus mindestens einer kochwasserbeständigtransparenten Schutzschicht aus Copolyamid und mindestens einer Copolyamid – Barriere – Schicht, der für Verpackungen, insbesondere für Nahrungsmittel – Verpackungen geeignet ist.

Die Erfindung umfasst im speziellen die Kombination von Copolyamiden mit speziellen Barriere – Eigenschaften mit Copolyamiden mit ausgezeichneter Kochwasserbeständigkeit zu einem transparenten Mehrschichtverbund, die Verwendung dieses Verbundes zur Herstellung von flexiblen oder steifen Mehrweg – Mehrschicht – Verpackungen.

In der Verpackungs – und Nahrungsmittel – sowie pharmazeutischen Industrie besteht ein ansteigender Bedarf für geeignete Kunststoffmaterialien zum Ersatz von Glas – und Metallverpackungen, insbesondere bei Nahrungsmitteln, Getränken und pharmazeutischen Produkten. Die in diesen Bereichen angewendeten Mehrschicht – Verpackungssysteme enthalten in der Regel mehrere Schichten aus verschiedenen Polyme – ren wie Polyethylen, Polypropylen, Polyvinylchlorid und – fluorid, Polyvinylalkohol, Polyethylenterephthalat, Polyethylenvinylalkohol, Polyamide, Ionomere, Polyester, Polycarbonate, Polyacrylate und andere Polyme – re, deren Blends oder deren Mischungen.

Diese Verpackungssysteme stellen im allgemeinen Schutz – und Stützsysteme für die obengenannten Barriereschichten für Nahrungsmittel, Getränke sowie medizinischen, chemischen, biologischen und phar – mazeutischen Produkte dar. Sie umfassen im weitesten Sinne Verpackungsarten wie Schläuche, Rohre, Flaschen, Container, Säcke, Kannen oder ähnliche Behälter.

Jedoch müssen für die obengenannten Anwendungsgebiete die Kunststoffmaterialien zusätzlich zu einer guten Verarbeitbarkeit gute mechanischen Eigenschaften und eine Barriereschicht aufweisen, die gegenüber Sauerstoff, Kohlendioxid, Wasserdampf und weiteren Gasen und Gasgemischen, wie Aroma – und Duftstoffen oder toxischen und nichttoxischen Gasen oder Kohlenwasserstoffen möglichst undurchläs – sig bzw. resistent ist. Sehr oft sind Materialien, die gute Sperrschicht – Eigenschaften gegenüber Sauerstoff aufweisen, wasserdampfdurchlässig. So stellen zum Beispiel polare Polymere, die Hydroxylgruppen ent – halten, wie Cellophan und Polyvinylalkohol, gute Sperrschichten gegenüber Sauerstoff dar, sie sind aber extrem hygroskopisch und verlieren ihre Sperrschichteigenschaften in einem signifikanten Ausmass, wenn sie feucht sind. Hydrophobe Polymere wie Polyolefine stellen eine gute Barriere gegenüber Wasserdampf dar, ihre Gebrauchsqualität gegen Sauerstoff ist jedoch schlecht. Polymere, die ein ausgewogenes Ver – hältnis von hydrophoben und hydrophilen Strukturen aufweisen, wie beispielsweise Polyvinylalkohol, Eth – ylenvinylalkoholcopolymere und Nylon (Nylon 6 und 6,6) weisen sehr gute Sperrschicht – Eigenschaften in Umgebungen auf, die einen niedrigen Wasserdampfdruck aufweisen, aber sobald dieser ansteigt, wird eine Nylon – Sperrschicht sauerstoffdurchlässig, was auf die plastifizierende Wirkung von absorbierten Wasser zurückzuführen ist.

Aus der US – PS 4,826,955 sind Barriereschichten aus einem amorphen Nyloncopolymer bekannt. Dieses Copolyamid ist aus Caprolactam, aus m – Xylilendiamin und Terephthalsäure oder Isophthalsäure aufgebaut. Bei Einwirkung von heissem Wasser wird die Barriereschicht stark trüb; der Glasumwandlungs – punkt (TG) wird auf sehr niedrige Werte von ca. 50˚C abgesenkt und bewirkt, dass das Copolyamid thermisch instabil wird.

Aus der US – PS 4,696,865 sind Copolyamide aus Hexamethylenterephthalamid (6.T) und Hexamethy – lenisophthalamid (6.I) zum Einsatz für Verpackungsbehälter wie Getränkeflaschen bekannt, wobei diese Copolyamidschichten sehr gute Barriere – Eigenschaften gegenüber Sauerstoff und Kohlendioxid aufweisen. Das Gewichtsverhältnis von Therephthalsäure zu Isophthalsäure in obigem Copolyamid liegt zwischen 1,0 und 1,9 insbesondere zwischen 1 und 1,5. Die Copolyamide gemäss der US – PS 4,696,865 weisen eine Glasumwandlungstemperatur (TG) von ca. 135 – 165˚C auf, der jedoch in konditioniertem Zustand unter 100˚C absinkt, wodurch ebenfalls Reinigungsvorgänge mit heissem Wasser schlecht durchgeführt werden können, so dass eine Wiederverwendung derartiger Behälter nicht vorgesehen ist bzw. sehr beschränkt ist. Aus hygienischen Gründen muss jedoch die Reinigung bei mindestens 70˚C erfolgen können. Die beanspruchten Copolyamide sind überdies schon von ihrer Herstellung her leicht trüb, was für viele Verpackungsarten nicht akzeptabel ist.

In der EP – A – 0378856 werden Polycarbonatbehälter beschrieben, deren äussere Schichten aus Polycarbonat bestehen und die eine innere Sperrschicht aus einem Copolyamid aus Nylon (6.I / 6.T) (ein amorphes Polyamid aus Hexamethylendiamin und einer Phthalsäurezusammensetzung, die etwa 65 Gew. – % Isophthalsäure und 35 Gew. – % Terephthalsäure enthält) besteht. Solche Copolyamide besitzen einen Glasumwandlungspunkt von ca. 125˚C (trocken) und kleiner als 70˚C in nassem Zustand. In Kontakt mit heissem Wasser wird das Copolyamid trüb und bruchanfällig, was eine Einschränkung der Wiederver – wendbarkeit bedingt.

Aus der EP − A − 0358038 sind Nylonblends, Einzel − und Mehrschichtenfilme und − behälter bekannt, die diese Nylonblends enthalten. Die dortigen Schichten sind aus einer Legierung aus amorphen Copoly − meren des Hexamethylenisophthalamid − Terephthalamids und einem kristallinen Copolyamid, das einen Schmelzpunkt von mindestens etwa 145°C aufweist. In dieser Polymerkombination sinkt einerseits der Erweichungspunkt des amorphen Copolyamids durch den Legierungseffekt mit dem teilkristallinen Copo − lyamid. Andererseits besitzt das Blend in konditioniertem Zustand eine viel niedrigere Festigkeit und Wärmeformbeständigkeit als in trockenem Zustand. Solche Legierungen werden nach wiederholtem Heisswasserkontakt ebenfalls trüb und spröde.

Aus der US − PS 4,937,130 sind Polycarbonatbehälter (Getränkeflaschen) bekannt, die zwischen der inneren aromatischen Polycarbonat − und der äusseren aromatischen Polycarbonatschicht eine Zwischen − schicht aus amorphem Polyamid enthalten. Das amorphe Polyamid besteht aus Hexamethylendiamin, Isophthalsäure, Terephthalsäure und 1,4 − Bisaminomethylcylohexan und hat eine Glasübergangstemperatur von nur etwa 105°C. In Kontakt mit heissem Wasser wird auch dieses Copolyamid trüb und bruchanfällig, was eine Beschränkung der Wiederverwendbarkeit nur für Mineralwässer bedeutet. Dies ist darauf zurück − zuführen, dass das heisse Wasser die Polycarbonat − Schicht durchdringt und in die Copolyamid − Schicht gelangt, wo es eine starke Trübung und Erweichung dieser Schicht verursacht.

Aus der EP − A − 409 666 oder der EP − A − 411 791 sind Polyamidzusammensetzungen mit verbes − serten Gas − Sperrschichteigenschaften, d.h. verbesserten Sauerstoffbarriere − Eigenschaften bekannt. Diese Polyamide bestehen aus Hexamethy − lendiamin und m − Xylilendiamin, Adipinsäure und ggf. Terephthals − äureeinheiten. Die Glasumwandlungstemperatur dieses Copolyamids liegt jedoch bei etwa 90°C. Eine Reinigung eines Behälters, der eine derartige Polyamid − Sperrschicht aufweist, mit heissem Wasser mit einer Temperatur von 70 bis 80°C zwecks Wiederverwendung des Behälters ist somit nicht möglich, da die Polyamidschicht erweicht und milchigtrüb wird.

Ein ähnliches Verhalten gegen Heisswasser zeigt das Copolyamid, welches gemäss der US − PS 4 983 719 aus p − Xylilen − diamin, Adipinsäure und Isophthalsäure hergestellt wird. Zwar werden hier Glasum − wandlungstemperaturen von bis zu 170°C erreicht, die jedoch in nassem Zustand unter 100°C absinken, wodurch ebenfalls Reinigungsvorgänge mit Heisswasser nicht durchführbar sind, weil das Copolyamid durch diesen Einfluss trübe und weich wird und sich damit für bestimmte Anwendungen in festen Verpackungen nicht eignet.

Es ist daher Aufgabe der Erfindung, einen Mehrschicht − Verbund, speziell für Nahrungsmittel − Verpackungen, aus mindestens einer Copolyamid − Schutzschicht und mindestens einer Copolyamid − Barriereschicht bereitzustellen, wobei die Schutzschicht des Verbundes einerseits eine sehr hohe Wärme − formbeständigkeit, hohe Festigkeit und Duktilität, trocken wie konditioniert, haben soll und andererseits gegen heisses bzw. kochendes Wasser mit einer Temperatur im Bereich von 70 bis über 95°C bzw. heisswasserdampfbeständig ist, so dass sie nicht trüb oder spröde wird und wobei die Barriereschicht des Verbundes gegenüber Sauerstoff, Kohlensäure und toxischen und nicht − toxischen Gasen, wie Aroma − und Duftstoffen oder Kohlenwasserstoff möglichst undurchlässig bzw. resistent sein soll. Dieser Mehrschicht − Verbund soll zur Herstellung von flexiblen oder steifen Mehrweg − Mehrschicht − Verpackun − gen verwendet werden können.

Diese Aufgabe wird durch die kennzeichnenden Merkmale des Anspruches 1 und 2 bzw. 23 gelöst.

In den Unteransprüchen sind vorteilhafte Ausgestaltungen der Erfindung enthalten.

Der erfindungsgemässe Mehrschicht − Verbund für Mehrweg − Mehrschicht − Verpackungen insbeson − dere Nahrungsmittel − Verpackungen besteht aus mindestens einer dauerhaft kochwasserbeständig − trans − parenten Copolyamid − Schutzschicht und mindestens einer Copolyamid − Barriereschicht.

Die kochwasserbeständige innere oder ggf. äussere Schicht verhindert in der mittleren Barriere − Schicht das Trübwerden durch heisses Wasser und Wasserdampf; die mittleren Schichten stellen Barrie − reschichten gegen Sauerstoff, Kohlensäure und weitere Gase oder Dämpfe dar.

Die Schutzschicht des erfindungsgemässen Mehrschicht − Verbundes ist kochwasserbeständig − trans − parent und das Copolyamid ist ein teilaromatisches, amorphes Copolyamid, das aus

(a) 2 bis 40 Mol − Teilen mindestens eines langkettigen aliphatischen Monomeren mit $C_9 − C_{40}$ − Atomen oder Lactam mit $C_9 − C_{12}$ − Atomen oder $\omega$ − Aminocarbonsäuren mit $C_9 − C_{12}$ − Atomen oder Dodecan − diamin und Dodecandisäure in nahezu äquimolarem Verhältnis,

(b) mindestens einem cycloaliphatischen Diamin mit $C_6 − C_{26}$ − Atomen,

und in nahezu äquimolarem Verhältnis mit

(c) mindestens einer unsubstituierten oder substituierten aromatischen Dicarbonsäure mit $C_8 − C_{20}$ − Atomen,

wobei sich (a), (b) und (c) auf 100 Mol − Teile ergänzen, aufgebaut ist.

EP 0 539 894 A1

Das Copolyamid der Barriereschicht des erfindungsgemässen Mehrschicht−Verbundes ist ein teilaromatisches Copolyamid, aus

(d) 0 bis 40 Mol−Teilen Lactam mit $C_6$ − $C_{12}$ − Atomen oder $\omega$ − Aminocarbonsäure mit $C_6$ − $C_{12}$ − Atomen oder aliphatischem Diamin mit $C_6$ − $C_{12}$ − Atomen in nahezu äquimolarem Verhältnis mit alipha− tischer Dicarbonsäure mit $C_6$ − $C_{12}$ − Atomen,

(e) mindestens einem kurzkettigen aliphatischen Diamin mit $C_4$ − $C_8$ − Atomen, welches durch maximal 49 Gew. − % mindestens eines weiteren Diamin, ausgewählt aus der Gruppe der cycloaliphatischen Diamine mit $C_6$ − $C_{26}$ − Atomen und/oder durch maximal 40 Mol−% eines araliphatischen Diamins mit $C_6$ − $C_{26}$ − Atomen ersetzt sein kann,

und in nahezu äquimolarem Verhältnis mit

(f) mindestens einer unsubstituierten oder substituierten aromatischen Dicarbonsäure mit $C_8$ − $C_{20}$ − Atomen,

aufgebaut ist. Diese aromatische Dicarbonsäure kann von 0 bis 20 Mol−Teilen durch mindestens eine aliphatische Dicarbonsäure mit $C_4$ − $C_8$ − Atomen ersetzt sein.

(d), (e) und (f) ergänzen sich auf 100 Mol−Teile.

Als Monomerbausteine werden Diamine und Dicarbonsäuren im wesentlichen in äquimolaren Anteilen zum Aufbau der Polyamide eingesetzt. Der Fachmann weiss jedoch, dass diese Anteile innerhalb gewisser Grenzen schwanken können, je nachdem, ob man mit Carboxyl−oder Aminogruppen terminierte Copolyamide haben will.

Der erfindungsgemässe Mehrschicht−Verbund enthält zusätzlich zur Schutz− und Barriereschicht mindestens eine oder mehrere andere Polymerschichten. Diese kann (können) aus Polymeren bestehen, die ausgewählt sind aus der Gruppe, die aus Polyethylen, Polypropylen, Polyvinylchlorid, Polycarbonat, Polyethylenterephthalat, Polyethylenstyrol, Polyvinylacetat, Polyacrylnitril, Polyvinylalkohol, Polysulfid, Polysulfon, Polyketon und Polystyrol besteht.

Die mindestens eine Barriereschicht des Verbundes liegt zwischen mehreren gleichen oder unterschiedlichen Schichten, die Schutz− oder Barriereschichten sind.

Der Mehrschicht−Verbund kann mehrere Barriere−Schichten aus unterschiedlichen Copolyamiden enthalten.

Das amorphe Copolyamid der Schutzschicht ist in einer bevorzugten Ausführungsform aus den folgenden Monomeren aufgebaut:

(a) Lactam oder $\omega$ − Aminocarbonsäure mit $C_{11}$ oder $C_{12}$ − Atomen oder Dodecandiamin und Dodecandisäure in nahezu äquimolarem Verhältnis, und

(b) unsubstituiertes oder $C_1$ − $C_4$ − Alkyl−substituiertes 4,4' − Diamino−dicyclohexyl − $C_1$ − $C_3$ − alkan in nahezu äquimolarem Verhältnis mit

(c) Terephthalsäure, die durch Isophthalsäure und gegebenenfalls bis zu 15 Mol−% durch mindestens eine aliphatische Dicarbonsäure mit $C_4$ − $C_8$ − Atomen oder mindestens eine cycloaliphatische Dicar− bonsäure mit $C_8$ − $C_{20}$ − Atomen ersetzt sein kann.

In einer anderen Ausführungsform ist das amorphe Copolyamid der Schutzschicht aus

(a) 2 bis 40 Mol−Teilen Lactam oder $\omega$ − Aminocarbonsäure mit $C_9$ − $C_{12}$ − Atomen

und

(b) mindestens einem Bis−(amino−cyclohexyl)−alkan oder seiner alkylierten Derivate mit $C_6$ − $C_{24}$ − Atomen

in nahezu äquimolarem Verhältnis mit

(c) mindestens einer aromatischen Dicarbonsäure mit $C_8$ − $C_{12}$ − Atomen, welche durch O bis zu 15 Mol − % mindestens einer aliphatischen Dicarbonsäure mit $C_4$ − $C_8$ − Atomen ersetzt sein kann,

aufgebaut.

Das Lactam (a) ist bevorzugt Laurinlactam, das Bis−(amino−cyclohexyl)−alkan (b) ist, 4,4' − Diamino− 3,3' − dimethyl−dicyclohexyl−methan und die aromatische Dicarbonsäure (c) ist Terephthalsäure oder Isophthalsäure oder ein Gemisch davon.

Das langkettige aliphatische Monomere (a) der Schutzschicht ist bevorzugt eine dimere Fettsäure mit $C_{28}$ − $C_{40}$ − Atomen, das cycloaliphatische Diamin (b) 4,4' − Diamino−3,3' − dimethyl−dicyclohexyl− methan(Laromin) oder 3 − Aminomethyl−3,5,5' − trimethyl−1 − cyclohexylamin (Isophorondiamin) oder ein Gemisch davon, die aromatische Dicarbonsäure (c) Terephthalsäure oder Isophthalsäure oder ein Gemisch davon. Terephthalsäure und Isophthalsäure können im Molverhältnis von 1:O bis O:1, insbesondere im Molverhältnis von 4:1 bis 1:4, vorliegen. Die dimere Fettsäure ist vorteilhaft mit dem cycloaliphatischen Diamin (b) in nahezu äquimolarem Mol−Verhältnis kombiniert.

Das Copolyamid der Barriereschicht ist aus

(d) 0 bis 40 Mol−Teilen Lactam mit $C_6 − C_{12}$−Atomen, $\omega$−Aminocarbonsäure mit $C_6 − C_{12}$−Atomen oder aliphatischem Diamin mit $C_6 − C_{12}$−Atomen in nahezu äquimolarem Verhältnis mit aliphatischer Dicarbonsäure mit $C_6 − C_{12}$−Atomen

und

(e) 30 bis 50 Mol−Teilen mindestens eines kurzkettigen aliphatischen Diamins mit $C_4 − C_8$−Atomen, das durch maximal 49 Gew.−% cycloaliphatisches Diamin und/oder maximal 40 Mol−% araliphatisches Diamin ersetzt sein kann,

in nahezu äquimolarem Verhältnis mit

(f) Terephthalsäure oder Isophthalsäure oder einem Gemisch davon, die (das) durch maximal 20 Mol−% aliphatischer Dicarbonsäure mit 4 bis 8 C−Atomen ersetzt sein kann,

aufgebaut,

wobei sich (d), (e) und (f) auf 100 Mol−Teile ergänzen.

Das Copolyamid der Barriereschicht enthält bevorzugt die Bausteine Hexamethylendiamin und cycloaliphatisches Diamin im Mol−Verhältnis von 1:49 bis 50:0.

In einer besonderen Ausführungsform enthält das Copolyamid der Barriereschicht als Bausteine:

(e) 50 Mol−Teile aus: 25 bis 48 Mol−Teilen Hexamethylendiamin und 2 bis 25 Mol−Teilen 4,4'−Diamino−3,3'−dimethyl−dicyclohexylmethan

sowie in nahezu äquimolarem Verhältnis

(f) Isophthalsäure oder Terephthalsäure oder einem Gemisch davon, wobei das Gemisch insbesondere Isophthalsäure und Terephthalsäure im Molverhältnis von 1:4 bis 4:1 enthalten kann.

Bevorzugt enthält das Copolyamid der Barriereschicht als Bausteine:

(e) 50 Mol−Teile aus: 10 bis 40 Mol−Teilen Hexamethylendiamin, 5 bis 20 Mol−Teilen m−Xylidendiamin, 5 bis 20 Mol−Teilen 4,4'−Diamino−3,3'−dimethylcyclohexylmethan

in nahezu äquimolarem Verhältnis mit

(f) Isophthalsäure oder Terephthalsäure oder einem Gemisch davon

bzw. enthält bevorzugt als Bausteine:

(e) 50 Mol−Teile aus: 5 bis 45 Mol−Teilen Hexamethylendiamin, 5 bis 45 Mol−Teilen m−Xylilendiamin

in nahezu äquimolarem Verhältnis mit

(f) Isophthalsäure oder Terephthalsäure oder einem Gemisch davon.

In einer weiteren Ausführungsform ist das Copolyamid der Barriereschicht aus:

(d) 5 bis 30 Mol−Teilen Laurinlactam oder $\omega$−Amino−Laurinsäure

und aus:

(e) Hexamethylendiamin und 4,4'−Diamino−3,3'−dimethyl−cyclohexylmethan im Molverhältnis 1:5 bis 5:1,

in nahezu äquimolarem Verhältnis mit

(f) Isophthalsäure oder Terephthalsäure oder einem Gemisch davon,

wobei sich (d), (e) und (f) auf 100 Mol−Teile ergänzen, aufgebaut.

Das Copolyamid der Barriereschicht ist in einer besonderen Ausführungsform in nahezu äquimolarem Verhältnis aus

(e) Hexamethylendiamin und

(f) Isophthalsäure oder Terephthalsäure oder einem Gemisch davon,

aufgebaut.

In bevorzugter Weise ist das Copolyamid der Barriereschicht weiterhin aus den folgenden Komponenten:

(d) 20 bis 70 Mol−Teilen Caprolactam oder $\omega$−Aminocapronsäure,

und aus

(e) Hexamethylendiamin und 4,4'−Diamino−3,3'−dimethyl−cyclohexyl−methan, wobei das Molverhältnis der Diamine von zwischen 4:1 und 1:4 liegt,

in nahezu äquimolarem Verhältnis mit

(f) Isophthalsäure oder Terephthalsäure oder einem Gemisch davon

aufgebaut,

wobei sich (d), (e) und (f) auf 100 Mol−Teile ergänzen.

Weiterhin kann das Copolyamid der Barriereschicht aus:

(d) 2 bis 30 Mol−Teilen Caprolactam oder $\omega$−Aminocapronsäure

und aus:

(e) Hexamethylendiamin

und in nahezu äquimolarem Verhältnis mit

(f) 5 bis 20 Mol – Teilen Adipinsäure und 29 bis 44 Mol – Teilen Isophthalsäure oder Terephthalsäure oder einem Gemisch davon,

aufgebaut sein,

wobei sich (d), (e) und (f) auf 100 Mol – Teile ergänzen.

Mehrweg – Mehrschicht – Verpackungen, hergestellt aus dem oben beschriebenen Mehrschicht – Verbund, können durch mindestens eine Schutz – und mindestens eine Barriereschicht gebildet werden, welche selbst lose, von anderen Schichten getrennt sein können oder mit einem anderen der obengenannten Polymeren ein Co – Extrudat, eine Verbindung oder ein Gemisch bilden können und z.B. durch Coextrusion, Tiefziehen, Blasformen oder einer vergleichbaren Technik hergestellt sein können.

Der erfindungsgemässe Mehrschicht – Verbund kann als Container, Flasche, Kanne oder ähnliche Behälter verwendet werden.

Der Bedarf an geeigneten Verpackungsmaterialien, welche ausgewogenen Barriere – Eigenschaften, neben guter Festigkeit und Wärmeformbeständigkeit, guter Waschbeständigkeit, hoher Transparenz und Eignung zur Wiederverwendung aufweisen, ist ausserordentlich gross. Von besonderem Interesse sind Mehrwegverpackungen für intensiv gefärbte, kohlensäurehaltige Produkte, die zur Reinigung heisswasserbeständig sind. Alle diese genannten Forderungen werden durch Verpackungsmaterialien erfüllt, die aus dem erfindungsgemässen Mehrschicht – Verbund hergestellt sind.

Die kochwasserbeständig – transparente Schutzschicht befindet sich üblicherweise innen und/oder aussen in diesem Verpackungen bzw. – systemen und besteht aus einem amorphen Copolyamid, bevorzugt aus einem Copolyamid auf Basis von Lactam – 12, Laromin, aromatischen Dicarbonsäuren (Grilamid TR 55 der Firma Ems – Chemie AG).

Die Erfindung betrifft daher einen Mehrschicht – Verbund aus mindestens einer kochwasserbeständig – transparenten Schutzschicht und mindestens einer Barriereschicht mit speziellen Eigenschaften, der für Verpackungen, bzw. Verpackungssysteme, speziell für Nahrungsmittelverpackungen geeignet ist.

Die Erfindung umfasst insbesondere die Kombination von Copolyamiden mit den erfindungsgemässen speziellen Barriereeigenschaften mit Copolyamiden mit ausgezeichneter dauerhafter Kochwasserbeständigkeit zu einem transparenten Mehrschicht – Verbund für Mehrschicht – Mehrweg – Verpackungen bzw. Verpackungssysteme. Wie schon oben beschrieben ist, enthalten diese Mehrschicht – Verpackungssysteme in der Regel mehrere Schichten, die aus verschiedenen Polymeren bestehen.

Der erfindungsgemässen Auswahl von bestimmten amorphen Copolyamiden und die Kombination derselben zu einem Mehrschicht – Verpackungssystem liegt der Bedarf des Marktes nach einer umfassenden Barriere für ein polymeres Verpackungsmaterial gegen Heisswasser, Wasserdampf, Sauerstoff, Kohlensäure und toxische Gase für Arome – und Duftstoffe und Dämpfe im Bereich der Verpackung von Fruchtsäften, Konfitüren und kohlensäurehaltigen Getränke zugrunde.

Schwerpunkt der Erfindung ist daher die Kombination in einer Mehrweg – Mehrschicht – Verpackung z.B. einer Mehrweg – Mehrschicht – Flasche mit einer inneren und/oder äusseren Schicht aus einem kochwasserbeständigen Copolyamid bevorzugt des Typs auf Basis von Lactam – 12, Laromin und aromatischen Dicarbonsäuren (Grilamid TR 55 der Firma Ems – Chemie AG) mit mindestens einer weiteren Schicht aus einem Copolyamid mit Barriereeigenschaften.

Eine bevorzugte Anwendung sind Getränkeflaschen und Behälter, in welchen das kochwasserbeständige Copolyamid die Innenschicht und/oder Aussenschicht und das Barriere – Copolyamid eine mittlere Schicht bildet, wobei ein weiteres anderes Polymeres, welches sich von Polystyrol, Polybutadien, Polyacrylnitril, Polycarbonat und noch weiteren anderen Polymeren ableitet, weitere Polymerschichten bilden kann.

Die kochwasserbeständig – transparente innere bzw. äussere Schicht verhindert in der mittleren Barriere – Schicht das Trübwerden durch Kochwasser und Wasserdampf; die mittleren Schichten stellen Barriereschichten gegen Sauerstoff, Kohlensäure und weitere Gase oder Dämpfe dar.

Eine wichtige Zielstellung dieser Erfindung stellen Mehrweg – Verpackungssysteme dar. Getränkeflaschen oder Behälter aller Art werden zur Reinigung nach Gebrauch Spülungen mit heissem Wasser oder alkalischen Reinigungslösungen bei 60 bis zu 95 ˚C oder Heissdampf unterworfen. Zur Reduzierung des polymeren Abfalls im Bereich Getränke – Verpackungen haben daher Mehrweg – Verpackungen mit den erfindungsgemässen Schutz – und Barriereschichten eine grosse ökonomische und umweltpolitische Bedeutung.

Von Vorteil ist weiter, dass die erfindungsgemässen transparenten Barriereschicht – bzw. Schutzschichtcopolyamide einen Brechungsindex aufweisen, der sich an die nächstliegende polymere Schicht anpassen lässt, so dass keine Beeinträchtigung der Transparenz des Mehrschicht – Systems erfolgt. Der Brechungsindex der Polyamide der Schutz – bzw. Barriereschicht kann innerhalb weiter Grenzen eingestellt werden. Da die Schutzschicht gegen Kochwasser bzw. Wasserdampf beständig ist, wird eine Wiederver –

wendung gebrauchter Flaschen und Behälter ermöglicht, die beispielsweise 15 bis 20 Reinigungszyklen bei 80˚C und höher oder bei Wasserdampf oder alkalischen Reinigungslösungen bei 60˚C bis zu 95˚C während einer Zeitdauer des Zyklusses von 15 bis 20 Minuten aushalten. Auf diese Weise kann der polymere Abfall im Bereich der Getränke − Verpackungen oder bei Mehrweg − Verpackungen erheblich reduziert werden, was von grosser ökonimischer und umweltpolititscher Bedeutung ist.

Die Erfindung wird nun durch die folgenden Beispiele näher erläutert.

Beispiel 1 bis 9:

Ein 150 l − Druckautoklav, der mit Rührer, Thermofühler, Stickstoffbegasung, Oelumlaufheizung ausge − rüstet ist, wird mit Monomeren mit der in Tabelle 9 aufgeführten Zusammensetzung beschickt und die Copolyamide 1 bis 9 von definierter Zusammensetzung durch Polykondensation in der Schmelze hergestellt und daraus 50 $\mu$m Flachfolien extrudiert, welche auf Sauerstoff − bzw. $CO_2$ − Durchlässigkeit und Heisswasser − bzw. Kochwasserbeständigkeit geprüft wurden.

Die Ergebnisse sind in Tabelle 1 enthalten.

Tabelle 1: Beispiele 1 bis 9

| Bei-spiel | Copolyamid Zusammensetzung | relative Viskosität ** | TG DSC °C | $O_2$ $cm^3/m^2/d$ bar trock/kondit | | $CO_2$ $cm^3/m^2/d$ bar trocken | heisswasser-beständig 80°C 6h | 24h |
|---|---|---|---|---|---|---|---|---|
| 1 | HMD-IPS-TPS 3:2:1 | 1,52 | 125 | 30 | 8 | 70 | - | - |
| 2 | HMD-Laromin-IPS-TPS 8:2:9:1 | 1,55 | 159 | 60 | 16 | 180 | + | - |
| 3 | HMD-MXDA-IPS-TPS 7:3:7:3 | 1,50 | 138 | 22 | 7 | 47 | o | - |
| 4 | HMD-MXDA-IPS 7:3:10 | 1,58 | 140 | 27 | 8 | 58 | o | - |
| 5 | HMD-MXDA-Laromin-IPS 5:3:2:10 | 1,40 | 168 | 47 | 15 | 47 | + | - |
| 6 | LC6-MXDA-AS 10:1:1 | 1,60 | 55 | 16 | 28 | 53 | - | - |
| 7 | LC6-MXDA-TPS 10:1:1 | 1,50 | 68 | 15 | 18 | 65 | - | - |
| 8 | LC12-HMD-IPD-TPS-IPS 4:5:3:5:3 | 1,55 | 145 | 35 | 20 | 205 | - | - |
| 9 | LC12-Laromin-IPS-TPS 3:3:2,5:0,5 | 1,54 | 158 | 1000 | - | 4000 | +[*] | +[*] |

\* auch bei 100°C transparent und beständig
\*\* 0.5%-ig in m-Kresol

EP 0 539 894 A1

Erklärung zu Tabelle 1:

+ = beständig ohne zu trüben oder schrumpfen

O = teilweise beständig, schwache Trübung,
leichter Schrumpf

- = nicht beständig, starke Trübung und Schrumpf

Laromin = 4,4'-Diamino-3,3'-dimethyl-dicyclohexyl-methan

AS = Adipinsäure

MXDA = m-Xylilendiamin

LC6 = Caprolactam

LC12 = Lactam-12 oder Laurinlactam

IPD = Isophorondiamin

HMD = Hexamethylendiamin

IPS = Isophthalsäure

TPS = Terephthalsäure

TR 55 = ein Copolyamid auf Basis von Lactam-12,
Laromin und aromatischen Dicarbonsäuren

Die Folien aus den Copolyamiden der Beispiele 1 bis 8 besitzen sehr gute Barriereeigenschaften für Sauerstoff und $CO_2$, aber teilweise keine gute Heisswasser − bzw. Kochwasserbeständigkeit (Beispiel 1, 6, 7, 8). Das Copolyamid aus Beispiel 9 auf Basis von Lactam − 12, Laromin und aromatischen Dicarbonsäuren (Typ Grilamid TR 55) hingegen besitzt geringere Barriereeigenschaften, aber eine ausgezeichnete Heiss − wasserbeständigkeit bis 100˚C, d.h. es ist kochwasserbeständig.

Es wurden nun transparente Formkörper aus dem Copolyamid aus Beispiel 9 aus Basis von Lactam − 12, Laromin und aromatischen Dicarbonsäuren (Grilamid TR 55) mit jedem der eingeführten Copolyamide aus den Beispielen 1 − 8 in Form einer Mehrschicht − Verbund − Folie durch Coextrusion und eines Mehrschicht − Hohlkörpers mit losen Schichten durch Extrusions − Blasformen hergestellt.

Die Verbund − Folie und der Hohlkörper enthalten das Copolyamid auf Basis von Lactam − 12, Laromin und aromatischen Dicarbonsäuren (Grilamid TR 55) als beidseitige Begrenzungsschicht (aussen und innen). Bei einem Hohlkörper aber war nur die Innenschicht aus einem Copolyamid auf Basis von Lactam − 12, Laromin und aromatischen Dicarbonsäuren (Grilamid TR 55), während die Aussenschicht aus Polycar − bonat auf Basis von Bisphenol A, mit einem MVI von 2 $cm^3$ / 10 min. bei 280˚C, 3,8 kg (ISO − Norm 1133) (Lexan PKG 1643) bestand.

Die Verbundfolie wurde für 24 und 48 Stunden in Heisswasser von 80˚C gelegt. Die Transparenz der Schichten blieb erhalten ohne geringste Trübung und ohne nennenswerten Schrumpf.

Die Hohlkörper wurden 24 und 48 Stunden lang mit Heisswasser von 70 bis 80˚C aus einem thermostatisierten Vorratsgefäss gespült, ohne dass in den Schichten eine Trübung auftrat.

**Patentansprüche**

1. Mehrschicht − Verbund für Mehrweg − Mehrschicht − Verpackungen aus mindestens einer Copolyamid − Schutzschicht und mindestens einer Copolyamid − Barriereschicht, dadurch gekennzeichnet,
   − dass die Schutzschicht kochwasserbeständigtransparent und das Copolyamid ein teilaromati − sches, amorphes Copolyamid ist, das aus
   (a) 2 bis 40 Mol − Teilen mindestens eines langkettigen aliphatischen Monomeren mit $C_9 − C_{40} −$ Atomen oder Lactam mit $C_9 − C_{12} −$ Atomen oder $\omega −$ Aminocarbonsäuren mit $C_9 − C_{12} −$ Atomen oder Dodecandiamin und Dodecandisäure in nahezu äquimolarem Verhältnis,
   (b) mindestens einem cycloaliphatischen Diamin mit $C_6 − C_{26} −$ Atomen,
   und in nahezu äquimolarem Verhältnis mit

(c) mindestens einer unsubstituierten oder substituierten aromatischen Dicarbonsäure mit $C_8$ – $C_{20}$ – Atomen,

wobei sich (a), (b) und (c) auf 100 Mol – Teile ergänzen,

aufgebaut ist,

– dass das Copolyamid der Barriereschicht ein teil – aromatisches Copolyamid ist, das aus

(d) 0 bis 40 Mol – Teilen Lactam mit $C_6$ – $C_{12}$ – Atomen oder $\omega$ – Aminocarbonsäure mit $C_6$ – $C_{12}$ – Atomen oder aliphatischem Diamin mit $C_6$ – $C_{12}$ – Atomen in nahezu äquimolarem Verhältnis mit aliphatischer Dicarbonsäure mit $C_6$ – $C_{12}$ – Atomen,

(e) mindestens einem kurzkettigen aliphatischen Diamin mit $C_4$ – $C_8$ – Atomen, welches durch maximal 49 Gew. – % mindestens eines weiteren Diamins ausgewählt aus der Gruppe der cycloaliphatischen Diamine mit $C_6$ – $C_{26}$ – Atomen und/oder durch maximal 40 Mol – % eines araliphatischen Diamins mit $C_6$ – $C_{26}$ – Atomen, ersetzt sein kann,

und in nahezu äquimolarem Verhältnis mit

(f) mindestens einer unsubstituierten oder substituierten aromatischen Dicarbonsäure mit $C_8$ – $C_{20}$ – Atomen, welche von 0 bis 20 Mol – Teilen durch mindestens eine aliphatische Dicarbonsäure mit $C_4$ – $C_8$ – Atomen ersetzt sein kann,

wobei sich (d), (e) und (f) auf 100 Mol – Teile ergänzen,

aufgebaut ist.

2. Mehrschicht – Verbund gemäss Anspruch 1, dadurch gekennzeichnet, dass er zusätzlich zur Schutz – und Barriereschicht aus mindestens einer weiteren anderen Polymerschicht besteht.

3. Mehrschicht – Verbund gemäss Anspruch 2, dadurch gekennzeichnet, dass die weitere bzw. die weiteren Polymerschicht(en) aus Polymeren besteht (bestehen), die ausgewählt sind aus der Gruppe, die aus Polyethylen, Polypropylen, Polyvinylchlorid, Polycarbonat, Polyethylenterephthalat, Polyethylenstyrol, Polyvinylacetat, Polyacrylnitril, Polyvinylalkohol, Polysulfid, Polysulfon, Polyketon und Polystyrol besteht.

4. Mehrschicht – Verbund gemäss den Ansprüchen 1 bis 3, dadurch gekennzeichnet, dass die mindestens eine Barriereschicht zwischen mehreren gleichen oder unterschiedlichen Schichten liegt, die Schutz – oder Barriereschichten sind.

5. Mehrschicht – Verbund gemäss Anspruch 1, dadurch gekennzeichnet, dass er mehrere Barriere – Schichten aus unterschiedlichen Copolyamiden enthält.

6. Mehrschicht – Verbund gemäss Anspruch 1, dadurch gekennzeichnet, dass das amorphe Copolyamid der Schutz – schicht aus den folgenden Monomeren aufgebaut ist:

schicht aus den folgenden Monomeren aufgebaut ist:

(a) Lactam oder $\omega$ – Aminocarbonsäure mit $C_{11}$ oder $C_{12}$ – Atomen oder Dodecandiamin und Dodecandisäure in nahezu äquimolarem Verhältnis

und

(b) unsubstituiertes oder $C_1$ – $C_4$ – Alkyl – substituiertes 4,4' – Diamino – dicyclohexyl – $C_1$ – $C_3$ – alkan in nahezu äquimolarem Verhältnis mit

(c) Terephthalsäure, die durch Isophthalsäure und gegebenenfalls bis zu 15 Mol – % durch mindestens eine aliphatische Dicarbonsäure mit $C_4$ – $C_8$ – Atomen oder mindestens eine cycloaliphatische Dicarbonsäure mit $C_8$ – $C_{20}$ – Atomen ersetzt sein kann.

7. Mehrschicht – Verbund gemäss Anspruch 1, dadurch gekennzeichnet, dass das amorphe Copolyamid der Schutzschicht aus

(a) 2 bis 40 Mol – Teilen Lactam oder $\omega$ – Aminocarbonsäure mit $C_9$ – $C_{12}$ – Atomen

und

(b) mindestens einem Bis – (amino – cyclohexyl) – alkan oder seinen alkylierten Derivaten mit $C_6$ – $C_{24}$ – Atomen

in nahezu äquimolarem Verhältnis mit

(c) mindestens einer aromatischen Dicarbonsäure mit $C_8$ – $C_{12}$ – Atomen, welche durch 0 bis 15 Mol – % mindestens einer aliphatischen Dicarbonsäure mit $C_4$ – $C_8$ – Atomen ersetzt sein kann,

aufgebaut ist.

8. Mehrschicht – Verbund gemäss Anspruch 6 und 7, dadurch gekennzeichnet, dass das Lactam (a) Laurinlactam, das Bis – (amino – cyclohexyl) – alkan (b) 4,4' – Diamino – 3,3' – dimethyl – dicyclohexyl – methan ist und die aromatische Dicarbonsäure (c) Terephthalsäure oder Isophthalsäure oder ein Gemisch davon ist.

9. Mehrschicht – Verbund gemäss Anspruch 1, dadurch gekennzeichnet, dass das langkettige aliphatische Monomere (a) der Schutzschicht eine dimere Fettsäure mit $C_{28} – C_{40}$ – Atomen ist, das cycloaliphatische Diamin (b) 4,4' – Diamino – 3,3' – dimethyl – diclohexyl – methan oder 3 – Aminomethyl – 3,5,5' – trimethyl – 1 – cyclohexylamin oder ein Gemisch davon ist, die aromatische Dicarbonsäure (c) Terephthalsäure oder Isophthalsäure oder ein Gemisch davon ist und wobei die dimere Fettsäure mit dem cycloaliphatischen Diamin (b) in nahezu äquimolarem Mol – Verhältnis kombiniert ist.

10. Mehrschicht – Verbund gemäss Anspruch 1, dadurch gekennzeichnet, dass das Copolyamid der Barriereschicht aus

(d) O bis 4O Mol – Teilen Lactam mit $C_6 – C_{12}$ – Atomen, $\omega$ – Aminocarbonsäure mit $C_6 – C_{12}$ – Atomen oder aliphatischem Diamin mit $C_6 – C_{12}$ – Atomen in nahezu äquimolarem Verhältnis mit aliphatischer Dicarbonsäure mit $C_6 – C_{12}$ – Atomen

und

(e) 3O bis 5O Mol – Teile mindestens eines kurzkettigen aliphatischen Diamins mit $C_4 – C_8$ – Atomen, das durch maximal 49 Gew. – % cycloaliphatisches Diamin und/oder maximal 40 Mol – % araliphatisches Diamin ersetzt sein kann,

in nahezu äquimolarem Verhältnis mit

(f) Terephthalsäure oder Isophthalsäure oder einem Gemisch davon, die (das) durch maximal 20 Mol – % aliphatischer Dicarbonsäure mit 4 bis 8 C – Atomen ersetzt sein kann,

wobei sich (d), (e) und (f) auf 100 Mol – Teile ergänzen, aufgebaut ist.

11. Mehrschicht – Verbund gemäss Anspruch 1, dadurch gekennzeichnet, dass das Diamin (e) der Barriereschicht ausgewählt ist aus der Gruppe: Hexamethylendiamin, 4,4' – Diamino – 3,3' – dimethyl – dicyclohexyl – methan, Xylilendiamin.

12. Mehrschicht – Verbund gemäss Anspruch 11, dadurch gekennzeichnet, dass das Copolyamid der Barriereschicht als aliphatisches Diamin (e) Hexamethylendiamin enthält.

13. Mehrschicht – Verbund gemäss Anspruch 1, dadurch gekennzeichnet, dass das Copolyamid der Barriereschicht die Bausteine Hexamethylendiamin und cycloaliphatisches Diamin im Molverhältnis von 1:49 bis 5O:O enthält.

14. Mehrschicht – Verbund gemäss Anspruch 1, dadurch gekennzeichnet, dass das Copolyamid der Barriereschicht als Bausteine enthält:

(e) 5O Mol – Teile aus:

25 bis 48 Mol – Teilen Hexamethylendiamin und

2 bis 25 Mol – Teilen 4,4' – Diamino – 3,3' – dimethyl – diclohexyl – methan sowie

in nahezu äquimolarem Verhältnis mit

(f) Isophthalsäure oder Terephthalsäure oder einem Gemisch davon, wobei das Gemisch insbesondere ein Molverhältnis von Isophthalsäure zu Terephthalsäure von 1:4 bis 4:1 enthält.

15. Mehrschicht – Verbund gemäss Anspruch 1, dadurch gekennzeichnet, dass das Copolyamid der Barriereschicht als Bausteine enthält:

(e) 5O Mol – Teile aus:

1O bis 4O Mol – Teile Hexamethylendiamin,

5 bis 2O Mol – Teile m – Xylilendiamin,

5 bis 2O Mol – Teile 4,4' – Diamino – 3,3' – dimethyl – cyclohexyl – methan

in nahezu äquimolarem Verhältnis mit

(f) Isophthalsäure oder Terephthalsäure oder einem Gemisch davon.

16. Mehrschicht – Verbund gemäss Anspruch 1, dadurch gekennzeichnet, dass das Copolyamid der Barriereschicht als Bausteine enthält:

(e) 5O Mol − Teile aus:

5 bis 45 Mol − Teile Hexamethylendiamin, 5 bis 45 Mol − Teile m − Xylilendiamin

in nahezu äquimolarem Verhältnis mit

(f) Isophthalsäure oder Terephthalsäure oder einem Gemisch davon.

17. Mehrschicht − Verbund gemäss Anspruch 1, dadurch gekennzeichnet, dass das Copolyamid der Bar − riereschicht aus

(d) 5 bis 3O Mol − Teilen Laurinlactam oder ω − Amino − Laurinsäure

und aus:

(e) Hexamethylendiamin und 4,4' − Diamino − 3,3' − dimethylcyclohexylmethan im Molverhältnis 1:5 bis 5:1,

in nahezu äquimolarem Verhältnis mit

(f) Isophthalsäure oder Terephthalsäure oder einem Gemisch davon,

wobei sich (d), (e) und (f) auf 100 Mol − Teile ergänzen, aufgebaut ist.

18. Mehrschicht − Verbund gemäss Anspruch 1, dadurch gekennzeichnet, dass das Copolyamid der Bar − riereschicht aus

(e) Hexamethylendiamin

in nahezu äquimolarem Verhältnis mit

(f) Isophthalsäure oder Terephthalsäure oder einem Gemisch davon

aufgebaut ist.

19. Mehrschicht − Verbund gemäss Anspruch 1, dadurch gekennzeichnet, dass das Copolyamid der Bar − riereschicht aus

(d) 2O bis 7O Mol − Teilen Caprolactam oder ω − Amino − capronsäure,

und aus

(e) Hexamethylendiamin und 4,4' − Diamino − 3,3' − dimethyl − cyclohexyl − methan,

wobei das Molverhältnis der Diamine von zwischen 4:1 und 1:4 liegt,

in nahezu äquimolarem Verhältnis mit

(f) Isophthalsäure oder Terephthalsäure oder einem Gemisch davon,

wobei sich (d), (e) und (f) auf 100 Mol − Teile ergänzen, aufgebaut ist.

20. Mehrschicht − Verbund gemäss Anspruch 1, dadurch gekennzeichnet, dass das Copolyamid der Bar − riereschicht aus

(d) 2 bis 3O Mol − Teilen Caprolactam oder ω − Amino − capronsäure

und aus:

(e) Hexamethylendiamin

in nahezu äquimolarem Verhältnis mit

(f) 5 bis 2O Mol − Teilen Adipinsäure und 29 bis 44 Mol − Teilen Isophthalsäure oder Terephthals − äure oder einem Gemisch davon,

wobei sich (d), (e) und (f) auf 100 Mol − Teile ergänzen, aufgebaut ist.

21. Mehrschicht − Verbund gemäss einem der Ansprüche 1 bis 20, dadurch gekennzeichnet, dass er als Container, Flasche, Kanne, Becher, Beutel oder Deckfolie geformt ist.

22. Mehrschicht − Verbund gemäss einem der Ansprüche 1 bis 21, dadurch gekennzeichnet, dass er durch Coextrusion, Blasformen, gegebenenfalls kombiniert mit Tiefziehen, hergestellt ist.

23. Verwendung eines Mehrschicht − Verbundes gemäss einem der Ansprüche 1 bis 22 zur Herstellung von Mehrweg − Mehrschicht − Verpackungen.

24. Verwendung eines Mehrschicht − Verbundes gemäss einem der Ansprüche 1 bis 20 in Form von Deckfolien zur Herstellung von Mehrweg − Mehrschicht − Verpackungen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 288 972 (MITSUBISHI GAS CHEMICAL COMPANY, INC.) <br> * Seite 1, Zeile 1 - Zeile 41; Ansprüche 1,3 * <br> * Seite 2, Zeile 54 - Seite 3, Zeile 28 * <br> * Seite 3, Zeile 53 - Seite 4, Zeile 17 * <br> --- | 1-4,6-24 | B32B27/34 <br> C08G69/36 <br> B65D65/40 |
| Y | FR-A-2 303 039 (BASF AG) <br> * Seite 1, Zeile 1 - Seite 2, Zeile 19; Anspruch 1 * <br> --- | 1-4,6-24 | |
| A | FR-A-2 355 044 (BASF AG) <br> * Seite 2, Zeile 17 - Seite 3, Zeile 19; Anspruch 1; Beispiele 1-3 * <br> --- | 9,11-14 | |
| A | EP-A-0 002 431 (BAYER AG) <br> * Seite 5, Absatz 1; Anspruch 1 * <br> --- | 1,6-20 | |
| Y | DATABASE WPIL <br> Derwent Publications Ltd., London, GB; <br> & JP-A-3 050 264 (UNITIKA K.K.) <br> * Zusammenfassung * <br> --- | 1,6-14, 17 | |
| A | DATABASE WPIL <br> Derwent Publications Ltd., London, GB; <br> & JP-A-2 008 051 (MITSUI DUPONT POLY.) <br> * Zusammenfassung * <br> ----- | 1-3, 11-13, 20-24 | RECHERCHIERTE SACHGEBIETE (Int. Cl.5) <br><br> C08G <br> B32B <br> B65D |

Der vorliegende Recherchenbericht wurde für alle Patentansprüche erstellt

| Recherchenort | Abschlußdatum der Recherche | Prüfer |
|---|---|---|
| DEN HAAG | 27 NOVEMBER 1992 | DERZ T. |